# FASCICULE DE BREVET EUROPEEN

(11) **EP 1 825 151 B1**
(45) Date de publication et mention de la délivrance du brevet: **30.12.2009**
(21) Numéro de dépôt: 05815962.5
(22) Date de dépôt: 27.10.2005
(51) Int. Cl.: F16B 5/00, B21D 22/04, F16B 5/02, B21D 28/26

(54) **TOLE, PROCEDE DE FIXATION DE LADITE TOLE PAR FLUOPERCAGE ET ASSEMBLAGE COMPRENANT LADITE TAULE**
METALLPLATTE, VERFAHREN ZUR BEFESTIGUNG DER METALLPLATTE DURCH FLIESSBOHREN UND DIESE UMFASSENDE ANORDNUNG
METAL SHEET, METHOD FOR FIXING SAID METAL SHEET BY FLOW DRILLING AND ASSEMBLY COMPRISING SAME

(30) Priorité: 16.11.2004 FR 0452640
(43) Date de publication de la demande: 29.08.2007
(73) Titulaire: RENAULT S.A.S., 92100 Boulogne Billancourt (FR)
(72) Inventeur: VOLLET, Ludovic, F-78000 VERSAILLES (FR); RAYEH, Abdelghani, F-93150 BLANC MESNIL (FR); DIJOLS, Daniel, F-92100 BOULOGNE (FR)
(74) Mandataire: Guyon, Rodolphe C.
(86) Numéro de dépôt international: PCT/FR2005/050910
(87) Numéro de publication internationale: WO 2006/054010

(56) Documents cités:
- DE-A1- 19 801 654
- FR-A- 2 762 045
- US-A- 1 695 476

## Description

### DOMAINE TECHNIQUE

L'invention se rapporte au domaine des assemblages sur tôles minces, et en particulier à la fixation d'un élément sur une tôle par vissage dans un trou taraudé de la tôle.

L'invention concerne notamment une tôle comprenant un prolongement tubulaire selon le préambule de la revendication 1, un assemblage comprenant une telle tôle et un procedé de fluoperçage de ladite tôle.

### ÉTAT DE LA TECHNIQUE ANTÉRIEURE

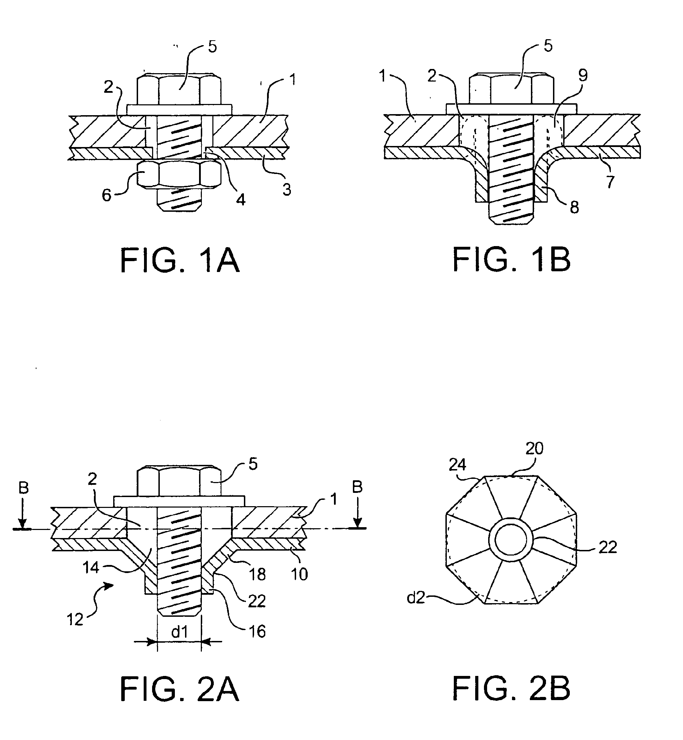

Dans le domaine automobile, de nombreux assemblages sur tôles minces sont réalisés. L'une des solutions adoptées concerne le sertissage d'écrous. Ainsi par exemple, tel qu'illustré sur la figure 1A, au niveau du capot avant de certains véhicules, une articulation de capot 1 comprenant des trous d'assemblage 2 doit être solidarisée sur un support d'articulation 3 d'épaisseur de l'ordre de 1,2 mm, par exemple en tôle de type « XES » : le support 3 est percé 4, l'articulation 1 et le support 3 sont solidarisés par l'intermédiaire d'une vis 5 de type M6, au couple de serrage 15 N/m grâce à un écrou 6 serti au niveau du support 2.

Bien que remplissant son rôle de fixation de façon fiable, cet assemblage par vis 5 et écrous 6 présente des inconvénients. En particulier, la mise en place de l'écrou 6, qu'il soit serti ou soudé, est malaisée et coûteuse, ce qui ajoute au prix de l'écrou en tant que tel.

Une alternative a été développée pour la fixation de capteurs sur la tôle cylindrique de conduits d'échappement, présentée par exemple dans le document FR-A-2 762 045 : tel que schématisé sur la figure 1B, il a été proposé de réaliser un fluoperçage de la tôle, et d'utiliser la douille ainsi formée et taraudée pour la solidarisation avec une vis.

Cette technique pose cependant des problèmes, illustrés en figure 1B, pour les tôles 7 minces, en particulier d'épaisseur inférieure à 1,5 mm, et pour les assemblages avec un élément 1 dont l'orifice de fixation 2 est de taille importante, très supérieure au diamètre de la vis 5 : pour l'exemple précédent, on constate au cours du vissage dans le prolongement fluotaraudé 8, une déformation 9 de ce dernier, pouvant aller jusqu'à la rupture pour les couples de serrage habituels. Or le couple de serrage pour une fixation à l'intérieur d'une automobile ne peut être diminué à volonté sans risques pour la sécurité, et l'épaisseur des tôles a été optimisée pour des raisons de poids, de fiabilité et de coût.

Le document DE19801654 propose, conformément à la figure 6 de ce document, une tôle selon le préambule de la revendication 1

### EXPOSÉ DE L'INVENTION

L'invention se propose d'utiliser le procédé de fluoperçage pour la fixation en palliant les problèmes existants. Cet but est atteint selon l'invention par une tôle avec les caractéristiques de la revendication 1 qui a subi un tel fluoperçage et susceptible d'être assemblée, par exemple par vissage, grâce au prolongement tubulaire ainsi créé.

Un assemblage selon l'invention, tel que défini dans la revendication 5, utilise un procédé d'emboutissage d'une tôle, même quand cette dernière est mince.

L'invention sous un autre de ses aspects concerne un procédé de fluoperçage selon revendication 7, qui crée un prolongement tubulaire d'assemblage sur la tôle comprenant une partie d'embase conique. Grâce à cette partie d'embase, intermédiaire entre la tôle et le trou, qui sera avantageusement taraudé, les efforts sont répartis lors de l'assemblage, et le prolongement tubulaire ne se déforme pas, ni ne se rompt. Il y a ainsi possibilité de vissage avec des couples de serrage habituels, même pour des tôles d'épaisseur inférieure à 1,5 mm.

La tôle selon l'invention possède un prolongement tubulaire en deux parties. Le trou traversant du prolongement tubulaire comprend un cercle inscrit dont le diamètre décroît dans la partie du prolongement adjacente à la tôle, et le trou est de diamètre constant dans la partie externe du prolongement. Et le trou est taraudé dans la partie externe.

Selon une forme de réalisation préférée, le trou formé dans la tôle est de section hexagonale.

La tôle peut être d'épaisseur inférieure à 1,5 mm, et en particulier, la tôle peut être un support d'articulation de capot de voiture qui a subi quatre fluoperçages selon l'invention.

La tôle peut être assemblée par une vis coopérant avec le trou taraudé, par exemple dans un capot de voiture.

### BRÈVE DESCRIPTION DES DESSINS

Les caractéristiques et avantages de l'invention seront mieux compris à la lecture de la description qui va suivre et en référence aux dessins annexés, donnés à titre illustratif.

La figure 1A, déjà décrite, représente un assemblage d'articulation de capot selon l'état de la technique ; la figure 1B, déjà décrite, montre un fluoperçage selon l'état de la technique d'un tel assemblage.

Les figures 2A et 2B montrent un assemblage selon un mode préféré de la présente invention.

### EXPOSÉ DÉTAILLÉ DE MODES DE RÉALISATION PARTICULIERS

La description qui suit se rapporte au même exemple que précédemment, à savoir la fixation par des vis 5 de type M6, avec un couple de serrage de l'ordre de 15 N/m, sur des tôles de caisse de voiture. En particulier, sur la figure 2A également, une articulation 1 de capot avant est solidarisée à un support d'articulation 10 d'épaisseur 1,2 mm en tôle de type « XE 320D ». Habituellement, quatre points de fixation sont utilisés. Cependant, les applications peuvent être bien entendu différentes, en particulier en ce qui concerne le diamètre de la vis 5, le couple de serrage, ou le matériau de la tôle 10.

Préalablement à l'assemblage, la tôle 10 a subi un procédé de fluoperçage selon l'invention.

Le fluoperçage consiste à percer une paroi avec un outil, par exemple en carbure de tungstène, une vitesse (de l'ordre de 1000 à 5000 tr/min) et une force de pénétration tels que l'élévation locale de la température entraîne la fusion du matériau de la paroi. Du fait de sa plasticité, le matériau de la paroi est refoulé autour de l'outil au fur et à mesure de l'avancement de ce dernier. Il y a ainsi formation d'un prolongement tubulaire 12 saillant d'un côté de la tôle 10. La longueur du prolongement tubulaire et le diamètre intérieur d1 du trou 14 au niveau de son extrémité distale peuvent être adaptés. En particulier, le trou 14 est taraudé pour un vissage.

Pour les assemblages tels que schématisés, l'orifice d'assemblage 2 de l'élément 1 à assembler à la tôle 10 est de taille très supérieure au diamètre de la vis 5 utilisée, c'est-à-dire au diamètre d1 du trou 14 obtenu dans la partie distale du prolongement tubulaire 12.

Afin de répartir les efforts le long des parois du prolongement tubulaire 12, ce dernier comprend deux parties. La première partie 16 du prolongement tubulaire 12, ou partie externe ou distale, est similaire aux prolongements classiques 8 : le trou intérieur 14 est de diamètre d1 sensiblement constant. Cette partie 16 est ensuite taraudée, par exemple selon une technique sans copeaux par déformation de la première partie 16 du prolongement tubulaire 12.

La deuxième partie 18 du prolongement tubulaire 12 forme son embase : elle est comprise entre la tôle 10 « non déformée », dont elle forme une partie intégrante, et la première partie 16, qui est également unitaire avec elle. La deuxième partie 18 est de forme générale conique. En particulier, le trou intérieur 14 du prolongement tubulaire 12 est de forme conique sur cette deuxième partie 18, c'est-à-dire que le cercle 20 inscrit à l'intérieur du trou 14 a un diamètre décroissant, avantageusement de façon continue, entre la tôle 10 et la jonction 22 entre première et deuxième parties 16, 18.

La forme générale 24 du trou 14 au niveau de la tôle 10 est indifférente. En particulier, le trou peut, tel qu'usuel, être circulaire, centré sur le même axe que la première partie 16 du prolongement tubulaire 12.

Selon un mode de réalisation préféré, le trou 14 est de forme hexagonale 24 en surface de la tôle 10, tel que schématisé en figure 2B. Par exemple, chaque côté de l'hexagone 24 peut faire 4 mm, pour être inscrit dans un cercle 20 de diamètre d2 de 12 mm, le diamètre final du taraud d1 étant de 8 mm ; la hauteur de la première partie 16 peut être de 5 mm, pour une embase conique 18 de longueur 5 mm. Ces dimensions doivent être comprises avec des marges d'erreur ; ainsi, de fait, 7 ≤ d1 ≤ 9 mm.

Un tel profil peut être obtenu par différentes passes d'emboutissage, au moyen d'un outil dont les dimensions, par exemple la longueur, peuvent être adaptées en fonction du nombre de passes nécessaires. A titre d'exemple, les différentes passes d'emboutissage peuvent suivre une première phase classique d'emboutissage, connue sous le nom de principe de boulage.

La tôle 10 selon l'invention peut concerner toute pièce de véhicule, en particulier d'épaisseur inférieure à 1,5 mm, et des couples de serrage usuels, voire encore plus importants. Sur ces tôles minces, il est donc possible, grâce à l'invention, de procéder à une fixation par fluotaraudé à embase conique à base hexagonale.

## Revendications

1. Tôle (10) comprenant un prolongement tubulaire (12) saillant d'un côté et fabriqué de façon unitaire avec la tôle (10), le prolongement tubulaire (12) définissant un trou (14) traversant ayant un premier diamètre (d1) au niveau de son extrémité saillante et dans lequel est inscrit un cercle (20) d'un deuxième diamètre (d2) au niveau de la tôle (10), le prolongement tubulaire (12) comprenant une première partie (16) dans laquelle le diamètre du trou (14) est constant et égal au premier diamètre (d1), et une deuxième partie (18) d'embase conique dans lequel le diamètre du cercle (20) inscrit dans le trou (14) croît du premier diamètre (d1) au deuxième diamètre (d2), **caractérisée en ce que** le trou (14) est taraudé dans ladite première partie (16) du prolongement tubulaire (12).

2. Tôle selon la revendication 1 ayant une épaisseur inférieure ou égale à 1,5 mm au niveau du prolongement tubulaire (12).

3. Tôle selon l'une des revendications précédentes dans laquelle le trou (14) est de forme hexagonale (24) au niveau de la tôle (10).

4. Tôle selon l'une des revendications précédentes dans laquelle le premier diamètre (d1) est compris entre 7 et 9 mm.

5. Assemblage comprenant une tôle (10) selon la revendication 4 et une vis (5) coopérant avec le premier diamètre (d1).

6. Assemblage selon la revendication 5 dans lequel la tôle (10) est un support d'articulation et comprenant en outre une articulation de capot (1), dans lequel la vis (5) solidarise l'articulation de capot (1) sur le côté du support d'articulation (10) opposé au prolongement tubulaire (12).

7. Procédé de fluoperçage d'une tôle (10) selon l'une quelconque des revendications 1 à 4, **caractérisé en ce que** le prolongement tubulaire (12) fabriqué par le fluoperçage comprend une embase (18) de forme conique au niveau de la tôle (10) et une partie externe (16) dans laquelle le trou (14) est de diamètre constant (d1), et **en ce que** le procédé comprend le taraudage du trou (14) dans la partie externe (16).

8. Procédé d'assemblage d'une articulation de capot (1) et d'une tôle (10) comprenant le procédé selon la revendication 7 et la solidarisation par vis (5) qui coopère avec le premier diamètre (d1).

## Claims

1. Metal sheet (10) comprising a tubular extension (12) projecting on one side and produced as one with the sheet (10), the tubular extension (12) defining a through-hole (14) of a first diameter (d1) at its projecting end and in which there is inscribed a circle (20) of a second diameter (d2) at the sheet (10) end, the tubular extension (12) comprising a first part (16) in which the diameter of the hole (14) is constant and equal to the first diameter (d1), and a conical seating second part (18) in which the diameter of the circle (20) inscribed in the hole (14) increases from the first diameter (d1) to the second diameter (d2), **characterized in that** the hole (14) is tapped in the first part (16) of the tubular extension (12).

2. Sheet according to Claim 1 with a thickness less than or equal to 1.5 mm at the tubular extension (12).

3. Sheet according to either of the preceding claims, in which the hole (14) is of hexagonal shape (24) at the sheet (10) end.

4. Sheet according to one of the preceding claims, in which the first diameter (d1) ranges between 7 and 9 mm.

5. Assembly comprising a sheet (10) according to Claim 4 and a screw (5) screwed into the first diameter (d1).

6. Assembly according to Claim 5, in which the sheet (10) is a hinge support further comprising a hood hinge (1), in which assembly the screw (5) secures the hood hinge (1) to the opposite side of the hinge support (10) from the side exhibiting the tubular extension (12).

7. Method of flow drilling a metal sheet (10) according to any one of Claim 1 to 4,
**characterized in that** the tubular extension (12) produced by the flow drilling comprises a seating (18) of conical shape at the sheet (10) and an external part (16) in which the hole (14) is of constant diameter (d1), and **in that** the method comprises the tapping of the hole (14) in the external part (16).

8. Method of assembling a hood hinge (1) to a sheet (10) involving the method according to Claim 7 and fastening using a screw (5) which is screwed into the first diameter (d1).

## Patentansprüche

1. Metallplatte (10), die eine röhrenförmige Verlängerung (12) umfasst, die von einer Seite vorragt und einteilig mit der Metallplatte (10) hergestellt ist, wobei die röhrenförmige Verlängerung (12) ein Durchgangsloch (14) definiert, das einen ersten Durchmesser (d1) an seinem vorragenden Ende aufweist und in dem ein Kreis (20) mit einem zweiten Durchmesser (d2) an der Metallplatte (10) verläuft, wobei die röhrenförmige Verlängerung (12) einen ersten Teil (16), in dem der Durchmesser des Lochs (14) konstant und gleich dem ersten Durchmesser (d1) ist, und einen zweiten, konischen Basis-Teil (18), in dem der in dem Loch (14) verlaufende Durchmesser des Kreises (20) von dem ersten Durchmesser (d1) zu dem zweiten Durchmesser (d2) zunimmt, aufweist, **dadurch gekennzeichnet, dass** das Loch (14) im ersten Teil (16) der röhrenförmigen Verlängerung (12) ein Innengewinde aufweist.

2. Metallplatte nach Anspruch 1, die an der röhrenförmigen Verlängerung (12) eine Dicke kleiner gleich 1,5 mm aufweist.

3. Metallplatte nach einem der vorhergehenden Ansprüche, bei der das Loch (14) an der Metallplatte (10) eine sechseckige Form (24) aufweist.

4. Metallplatte nach einem der vorhergehenden Ansprüche, bei der der erste Durchmesser (d1) zwischen 7 und 9 mm liegt.

5. Verbindung, die eine Metallplatte (10) nach Anspruch 4 und eine mit dem ersten Durchmesser (d1) zusammenwirkende Schraube (5) umfasst.

6. Verbindung nach Anspruch 5, bei der die Metallplatte (10) ein Gelenkträger ist und weiterhin eine Haubenanlenkung (1) umfasst, wobei die Schraube (5) die Haubenanlenkung (1) an der Seite des Gelenkträgers (10) gegenüber der röhrenförmigen Verlängerung (12) befestigt.

7. Verfahren zum Fließbohren einer Metallplatte (10) nach einem der Ansprüche 1 bis 4, **dadurch gekennzeichnet, dass** die durch das Fließbohren hergestellte röhrenförmige Verlängerung (12) an der Metallplatte (10) eine Basis (18) konischer Form und einen äußeren Teil (16) umfasst, in dem das Loch (14) einen konstanten Durchmesser (d1) aufweist, und dass das Verfahren das Gewindeschneiden des Lochs (14) in dem äußeren Teil (16) umfasst.

8. Montageverfahren einer Haubenanlenkung (1) und einer Metallplatte (10), das das Verfahren nach Anspruch 7 und die Befestigung durch eine Schraube (5), die mit dem ersten Durchmesser (d1) zusammenwirkt, umfasst.
